(19) Europäisches Patentamt / European Patent Office / Office européen des brevets

(11) **EP 1 492 965 B1**

(12) **FASCICULE DE BREVET EUROPEEN**

(45) Date de publication et mention
de la délivrance du brevet:
**03.01.2007 Bulletin 2007/01**

(21) Numéro de dépôt: **03738208.2**

(22) Date de dépôt: **28.03.2003**

(51) Int Cl.:
***F16F 9/512*** *(2006.01)*

(86) Numéro de dépôt international:
**PCT/FR2003/000979**

(87) Numéro de publication internationale:
**WO 2003/085283 (16.10.2003 Gazette 2003/42)**

(54) **AMORTISSEUR, NOTAMMENT POUR VEHICULE AUTOMOBILE**

DÄMPFER, INSBESONDERE FÜR EIN KRAFTFAHRZEUG

DAMPER, IN PARTICULAR FOR MOTOR VEHICLE

(84) Etats contractants désignés:
**DE ES FR GB IT SE**

(30) Priorité: **05.04.2002 FR 0204298**

(43) Date de publication de la demande:
**05.01.2005 Bulletin 2005/01**

(73) Titulaire: **Sirven, Jacques**
**F-78000 Versailles (FR)**

(72) Inventeur: **Sirven, Jacques**
**F-78000 Versailles (FR)**

(74) Mandataire: **Casalonga, Axel**
**Bureau Casalonga & Josse**
**Bayerstrasse 71/73**
**80335 München (DE)**

(56) Documents cités:
EP-A- 0 416 987    EP-A- 0 942 195
WO-A-00/69664     DE-A- 3 042 951
FR-A- 2 268 208    GB-A- 2 218 677
US-A- 3 492 013    US-A- 4 711 435

• PATENT ABSTRACTS OF JAPAN vol. 2000, no.
18, 5 juin 2001 (2001-06-05) -& JP 09 151980 A
(OEHLINS RACING AB;YAMAHA MOTOR CO
LTD), 10 juin 1997 (1997-06-10)
• PATENT ABSTRACTS OF JAPAN vol. 1997, no.
02, 28 février 1997 (1997-02-28) -& JP 08 260747
A (KAYABA IND CO LTD), 8 octobre 1996
(1996-10-08)

**Description**

La présente invention a pour objet un amortisseur, notamment pour véhicule automobile, comportant une valve de commande placée sur le trajet de l'écoulement du fluide hydraulique lors des mouvements de compression de l'amortisseur.

Un amortisseur hydraulique, utilisé en particulier dans un véhicule automobile, comprend généralement un cylindre rempli de fluide hydraulique, à l'intérieur duquel peut se déplacer un piston principal actionné par une tige. Le piston définit dans le cylindre une première chambre et une deuxième chambre contenant la tige. Lorsque le piston se déplace à l'intérieur du cylindre, le volume immergé de la tige varie, ce qui entraîne une variation du volume disponible pour l'huile à l'intérieur du cylindre. Un réservoir de fluide hydraulique est donc connecté au cylindre afin de compenser ces variations.

Afin de générer une force hydraulique opposée au mouvement de la suspension, notamment lors d'un mouvement de compression au cours duquel la tige pénètre dans le cylindre, on fait passer l'huile refoulée par le piston principal, à travers des restrictions qui peuvent être de différents types. On peut utiliser de simples orifices calibrés, des clapets constitués par des clinquants ou pièces métalliques légères, ou encore des valves de commande ou de pilotage relativement lourdes, comprenant d'une manière générale une soupape appliquée contre un siège, comme décrit par exemple dans la demande de brevet européen A-0 416 987 (SIRVEN).

Dans ce type d'amortisseur comportant une valve de commande présentant une soupape, la chute de pression générée par le passage d'un débit d'huile à travers la valve entraîne, à débit constant, une chute de pression qui oscille autour d'une valeur moyenne. L'utilisation de ce type de valve de commande permet aisément de faire varier la force tendant à fermer la soupape et donc la force d'amortissement créée par l'amortisseur pour l'adapter à des paramètres extérieurs, tels que l'état de la chaussée sur laquelle se déplace le véhicule. On rencontre toutefois, en raison des oscillations de la chute de pression au travers de la valve une instabilité du fonctionnement de tels amortisseurs.

Dans un amortisseur de type connu, tel que décrit dans la demande de brevet européen citée plus haut, lorsqu'on parvient à rendre la valve stable par des moyens appropriés, on constate en outre, lorsque la loi d'amortissement est telle que la pression décroît quand le débit traversant la valve augmente, l'apparition d'oscillations de la force d'amortissement liées à un couplage parasite de l'amortisseur et des éléments élastiques qui le lient au châssis du véhicule et à la roue.

De manière plus générale, on constate, lors de l'utilisation de tels amortisseurs de type connu, des phénomènes de percussion transmis à la structure du véhicule lors du passage sur des obstacles de petite amplitude lorsque la loi d'amortissement choisie est telle que la force d'amortissement décroît lorsque la vitesse de compression augmente.

Enfin, on constate également des difficultés lors du passage du fonctionnement en détente à un fonctionnement de l'amortisseur en compression, ces défauts étant vraisemblablement dus à un retard de fermeture de la valve de commande.

Le document JP(A)09-151980 montre les caractéristiques techniques du préambule de la revendication 1.

La présente invention a pour objet un amortisseur comportant des moyens additionnels susceptibles de supprimer les inconvénients des amortisseurs de type connu.

L'invention a en particulier pour objet un amortisseur dans lequel les difficultés résultant des oscillations de la force d'amortissement sont considérablement diminuées, voire totalement supprimées.

L'invention a également pour objet un tel amortisseur, grâce auquel les phénomènes de percussion rencontrés lors du passage sur des obstacles de petite amplitude sont supprimés.

La présente invention a également pour objet l'utilisation de tels amortisseurs sur un véhicule automobile, de manière à améliorer le comportement routier du véhicule.

Dans la présente description, les termes « entrée » et « sortie » ainsi que les notions « d'amont » et « d'aval » seront considérés lors d'un mouvement de compression de l'amortisseur au cours duquel la tige pénètre dans le cylindre de l'amortisseur. On comprendra que ces termes et définitions doivent être inversés dans le cas d'un mouvement inverse de détente de l'amortisseur.

L'amortisseur selon l'invention, notamment pour véhicule automobile, comprend un cylindre contenant un fluide hydraulique, un piston principal actionné par une tige définissant dans le cylindre une première chambre et une deuxième chambre, ladite deuxième chambre contenant la tige, un réservoir de fluide hydraulique et une valve placée dans l'écoulement du fluide hydraulique entre la première chambre et la deuxième chambre. La valve comporte une soupape mobile coopérant avec un siège et des moyens tendant à appliquer la soupape sur son siège. Des moyens de filtrage sont montés en parallèle de la valve et sont adaptés pour générer une pression de commande de filtrage agissant sur la soupape de la valve, la pression de commande dépendant de la variation de la différence de pression à l'entrée et à la sortie de la valve.

De cette manière, les moyens de filtrage montés en parallèle de la valve ne sont pas traversés par le débit principal de fluide lors d'un mouvement de compression de l'amortisseur, ce débit ne traversant que la valve. En revanche, la variation de la différence de pression à l'entrée de la valve et à sa sortie, ou ce qui revient au même, la variation de pression entre la première et la deuxième chambre du cylindre de l'amortisseur, est utilisée pour générer, par les moyens de filtrage, une pression de commande agissant sur la soupape. Cette pression de commande représente ainsi la dérivée de la différence de pression précitée.

Les moyens de filtrage sont traversés par un très faible débit, suffisant en phase de compression de l'amortisseur, pour générer la pression de commande désirée.

Les phénomènes de percussion dus à des obstacles de faible amplitude, rencontrés dans les amortisseurs de type connu dans lesquels la force d'amortissement est commandée pour décroître lors d'une augmentation de la vitesse de compression, se trouvent ainsi filtrés.

On comprend que c'est la variation de la force de compression qui induit un débit dans les moyens de filtrage générant la pression de commande.

Dans une application de l'amortisseur de l'invention à un véhicule automobile, il devient possible, par une variation appropriée des constantes de temps des moyens de filtrage équipant les amortisseurs du train avant par rapport aux amortisseurs du train arrière, de modifier le comportement de tenue de route du véhicule.

Dans un mode de réalisation avantageux, les moyens de filtrage comprennent : une chambre d'équilibrage divisée en deux parties par un piston mobile, les deux parties de la chambre d'équilibrage étant respectivement reliées par des conduites, d'une part à l'entrée de la valve, elle même reliée à la première chambre du cylindre et d'autre part à la sortie de la valve, elle même reliée à la deuxième chambre du cylindre et au réservoir. Le piston mobile est soumis à l'action d'un moyen de ressort d'équilibrage qui peut comprendre un ressort unique ou, de préférence, deux ressorts, exerçant chacun une force de compression sur une des faces du piston mobile.

Une restriction de filtrage est montée dans la conduite reliant l'une des parties de la chambre d'équilibrage à la valve. Une conduite de filtrage relie en outre ladite partie de la chambre d'équilibrage à la valve de façon à appliquer à la soupape mobile de la valve, la pression de commande de filtrage régnant dans ladite partie de la chambre d'équilibrage.

Le moyen de ressort permet d'équilibrer les différences de pression à l'entrée et à la sortie de la valve en l'absence de débit traversant les moyens de filtrage.

En cas de variation de la différence de pression entre l'entrée et la sortie de la valve, la restriction de filtrage génère une pression de commande qui est transmise à la valve par la conduite de filtrage.

Lorsqu'on utilise deux ressorts, il devient possible d'obtenir une caractéristique linéaire de la force créée par les ressorts.

La soupape mobile de la valve est généralement soumise à une force de fermeture tendant à appliquer la soupape sur son siège.

La force de fermeture peut être par exemple générée par un ressort.

Dans un autre mode de réalisation, la force de fermeture est générée au moyen d'une différence de pression hydraulique créée par une restriction montée en amont ou en aval de la valve de commande.

On peut également prévoir la combinaison d'un ressort avec une différence de pression hydraulique.

La soupape mobile peut également être soumise à une force tendant à l'ouvrir aux fortes vitesses de déplacement de la tige de l'amortisseur. Cette force peut avantageusement être générée au moyen d'une différence de pression créée par une restriction montée en aval ou en amont de la valve de commande.

Dans un premier mode de réalisation de l'invention, la valve comporte une chambre de commande reliée à l'entrée, du côté du siège de la soupape mobile, à la première chambre du cylindre, et reliée à la sortie à la deuxième chambre du cylindre et recevant en outre la pression de filtrage.

La soupape mobile comporte une tête de soupape capable de coopérer avec le siège, une tige de soupape et un piston de soupape solidaire de la tige à l'opposé de la tête de soupape. Un cylindre de régulation est logé à l'intérieur de la chambre de commande et définit une première chambre de régulation fermée, à l'intérieur de laquelle coulisse le piston de soupape.

Avantageusement, le cylindre de régulation définit une deuxième chambre de régulation fermée contenant la tige de soupape.

Selon une variante préférée, la tige de soupape présente un passage traversant mettant en communication le siège de la soupape avec l'une des chambres de régulation.

Selon une première variante, la restriction de filtrage est montée dans la conduite reliant la partie de la chambre d'équilibrage reliée à l'entrée de la valve et à la première chambre du cylindre tandis que la conduite d'équilibrage est reliée à la première chambre de régulation.

Selon une deuxième variante, la restriction de filtrage est montée dans la conduite reliant la partie de la chambre d'équilibrage reliée à la sortie de la valve et à la deuxième chambre du cylindre tandis que la conduite d'équilibrage est reliée à la deuxième chambre de régulation.

Dans un autre mode de réalisation, le passage traversant met en communication le siège de la soupape avec la première chambre de régulation et le cylindre de régulation définit une troisième et une quatrième chambres de régulation contenant la tige de soupape, la soupape comportant un piston auxiliaire séparant les dites troisième et quatrième chambres de régulation.

Dans un autre mode de réalisation, le passage traversant met en communication le siège de la soupape avec la première chambre de régulation et le cylindre de régulation définit une troisième et une quatrième chambres de régulation contenant la tige de soupape. Un manchon formant piston auxiliaire est monté coulissant le long de la tige de la soupape. Le piston auxiliaire sépare lesdites troisième et quatrième chambres de régulation et le manchon coulissant s'appuie sur la tête de la soupape par l'intermédiaire d'une liaison à ressort.

De cette manière, le ressort est capable de générer un retard à l'ouverture de la valve.

Les dites troisième et quatrième chambres de régulation sont avantageusement soumises respectivement à la pression en aval et en amont de la restriction montée sur la conduite de sortie de la valve.

Selon une variante, la tige comprend un épaulement dans la troisième chambre.

Lesdites troisième et quatrième chambres de régulation peuvent dans ce cas, être soumises respectivement à la pression en aval de la restriction montée sur la conduite de sortie de la valve vers la deuxième chambre du cylindre et à la pression en aval d'une restriction montée sur la conduite de sortie de la valve vers le réservoir.

L'invention sera mieux comprise à l'étude de la description détaillée de quelques modes de réalisation illustrés par les dessins annexés, sur lesquels :

- la figure 1 représente schématiquement les principaux éléments constitutifs d'un amortisseur selon l'invention, conformément à un premier mode de réalisation ;
- la figure 2 représente schématiquement les principaux éléments constitutifs d'une première variante, du premier mode de réalisation ;
- la figure 3 représente schématiquement les principaux éléments constitutifs d'une deuxième variante du premier mode de réalisation ;
- la figure 4 représente schématiquement les principaux éléments constitutifs d'une troisième variante du premier mode de réalisation ;
- la figure 5 représente schématiquement les principaux éléments constitutifs d'un amortisseur selon l'invention, conformément à un deuxième mode de réalisation ;
- la figure 6 représente schématiquement les principaux éléments constitutifs d'une première variante du deuxième mode de réalisation ;
- la figure 7 représente schématiquement les principaux éléments constitutifs d'une deuxième variante du deuxième mode de réalisation ;
- la figure 8 représente schématiquement les principaux éléments constitutifs d'une troisième variante du deuxième mode de réalisation ;
- la figure 9 représente schématiquement les principaux éléments constitutifs d'un troisième mode de réalistion d'un amortisseur selon l'invention ;
- la figure 10 représente schématiquement les principaux éléments constitutifs d'une variante du troisième mode de réalisation ;
- la figure 11 montre la courbe de variation des pressions générées par deux restrictions ;
- la figure 12 montre la courbe de variation de la force d'amortissement ;
- la figure 13 est une vue en coupe d'une réalisation pratique d'un ensemble comportant sous une forme intégrée un réservoir, une valve de commande et des moyens de filtrage ;
- la figure 14 est une vue en coupe selon XIV-XIV de la figure 13 ; et
- la figure 15 est une vue en coupe selon XV-XV de la figure 13.

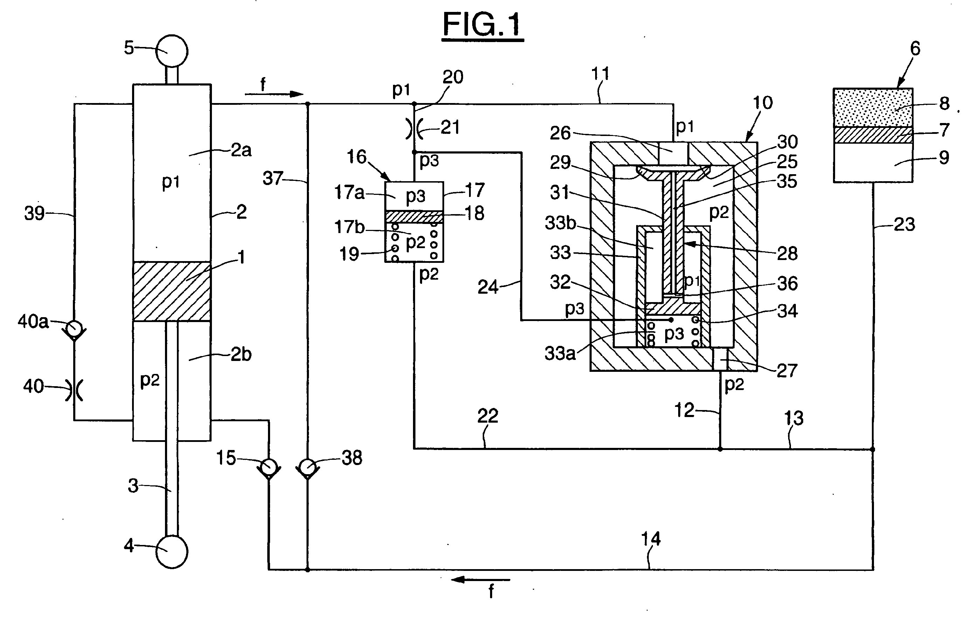

Tel qu'il est illustré sur la figure 1, selon un premier mode de réalisation l'amortisseur selon l'invention, qui peut être utilisé en particulier pour une suspension de véhicule automobile, comprend un piston 1 principal qui peut coulisser à l'intérieur d'un cylindre 2 et définit dans celui-ci une première chambre 2a côté fond du piston 1, et une deuxième chambre 2b qui renferme la tige 3 solidaire du piston 1. A son extrémité libre, la tige 3 présente un anneau d'accrochage 4 qui peut être relié à la roue du véhicule automobile. A l'extrémité opposée, le cylindre 2 est fermé et comporte un élément d'accrochage 5 qui peut être solidarisé avec la caisse du véhicule. Les deux chambres 2a et 2b du cylindre 2 sont remplies d'un fluide hydraulique tel que de l'huile.

L'ensemble de l'amortisseur est complété par un réservoir 6 qui comprend un piston flottant 7 séparant la partie supérieure 8 du réservoir 6 qui est remplie d'un gaz de la partie inférieure 9 remplie de fluide hydraulique.

Une valve 10 est placée dans l'écoulement du fluide hydraulique entre la première chambre 2a et la deuxième chambre 2b. La valve 10 est en effet reliée à la première chambre 2a par la conduite 11 et à la deuxième chambre 2b par les conduites 12, 13 et 14, à travers un clapet anti-retour 15 qui autorise un écoulement du fluide hydraulique vers la deuxième chambre 2b et l'interdit dans l'autre sens.

Des moyens de filtrage 16 sont montés dans le circuit hydraulique en parallèle de la valve 10. Les moyens de filtrage 16 comprennent une chambre d'équilibrage 17 séparée en deux parties 17a, 17b par un piston mobile 18 soumis à l'action d'un ressort d'équilibrage 19 placé dans la partie 17b de la chambre d'équilibrage.

La première partie 17a de la chambre d'équilibrage est reliée par la canalisation 20 et la canalisation 11 à l'entrée de la valve 10, elle-même reliée à la première chambre 2a du cylindre 2. Une restriction de filtrage 21 faisant partie des moyens de filtrage 16, est montée dans la conduite 20.

La deuxième partie de la chambre d'équilibrage 17b est reliée par la canalisation 22 et la canalisation 12 à la sortie de la valve 10, elle-même reliée à la deuxième chambre 2b du cylindre 2 par les canalisations 13 et 14, et au réservoir 6 par la canalisation 23.

Une conduite de filtrage 24 relie la première partie 17a de la chambre d'équilibrage à la valve 10.

La valve 10 comporte une chambre de commande 25 qui présente un orifice d'entrée 26 recevant l'écoulement du fluide hydraulique provenant de la première chambre 2a du cylindre 2 par l'intermédiaire de la canalisation 11, lors d'un mouvement de compression exercé sur l'amortisseur, c'est-à-dire un mouvement d'enfoncement du piston principal 1 dans le cylindre 2.

La chambre de commande 25 présente un orifice de sortie 27 par lequel s'écoule le fluide hydraulique afin de revenir principalement vers la deuxième chambre 2b par les canalisations 12, 13 et 14, en passant à travers le clapet anti-retour 15 lors d'un tel mouvement de compression. Une partie du fluide hydraulique correspondant au volume supplémentaire immergé de la tige 3, est en outre acheminée vers le réservoir 6 par les canalisations 12, 13 et 23.

A l'intérieur de la chambre de commande 25 de la valve 10 est montée une soupape mobile 28, qui comprend une tête de soupape 29 capable de coopérer avec un siège 30 défini au voisinage de l'entrée 26 de la chambre de commande 25. La soupape mobile 28 comporte également une tige de soupape 31 et un piston de soupape 32 solidaire de la tige 31 et disposé à l'opposé de la tête de soupape 29. La section du piston de soupape 32 est inférieure à celle de la tête de soupape 29.

A l'intérieur de la chambre de commande 25, est disposée une pièce fermée jouant le rôle d'un cylindre de régulation 33. Le piston de soupape 32 coulisse à l'intérieur de ce cylindre 33. Le piston de soupape 32, définit à l'intérieur du cylindre de régulation 33, une première chambre de régulation fermée 33a et une deuxième chambre de régulation également fermée 33b, contenant la tige de soupape 31. Un ressort 34, disposé à l'intérieur de la première chambre de régulation 33a, agit à l'encontre du piston de soupape 32 dans le sens qui tend à fermer la valve 10, c'est-à-dire à appliquer la tête de soupape 29 sur son siège 30.

La tige de soupape 31 présente un passage traversant 35 qui met en communication la face externe de la tête de soupape 29, du côté du siège 30, avec la deuxième chambre de régulation 33b par l'intermédiaire d'un perçage transversal 36.

L'ensemble est complété par une canalisation 37 comportant un clapet anti-retour 38, est capable de mettre en communication le réservoir 6 par l'intermédiaire des canalisations 23 et 14 avec la première chambre 2a du cylindre 2 par la canalisation 11.

Enfin, des moyens appropriés sont prévus pour assurer le retour du fluide hydraulique de la deuxième chambre 2b vers la première chambre 2a du cylindre 2 lors d'un mouvement de détente correspondant à un mouvement d'extraction du piston principal 1. A cet effet, une canalisation 39 comportant une restriction 40 et un clapet anti-retour 40a est reliée, d'une part, à la deuxième chambre 2b et, d'autre part, à la première chambre 2a, de façon à autoriser un écoulement de fluide hydraulique depuis la deuxième chambre 2b vers la première chambre 2a et à l'interdire dans le sens inverse.

L'ensemble des éléments de l'amortisseur fonctionne de la manière suivante, lors d'un mouvement de compression correspondant à un enfoncement du piston principal 1 et de la tige 3 à l'intérieur du cylindre 2. On notera $p_1$ la pression du fluide hydraulique à l'intérieur de la première chambre 2a du cylindre 2, et $p_2$ la pression régnant dans la deuxième chambre 2b du cylindre 2.

Lors d'un mouvement de compression, le fluide hydraulique s'écoule depuis la première chambre 2a dans la canalisation 11 dans le sens indiqué par la flèche f. La pression $p_1$ s'exerce à l'entrée de la valve de commande 10, ainsi que sur la face externe de la tête de soupape 29. La pression du fluide hydraulique dans la canalisation 12 à la sortie de la valve de commande 10 est la pression $p_2$. La pression du fluide hydraulique à l'intérieur de la chambre de commande 25, est donc également $p_2$. Cette même pression $p_2$ règne à l'intérieur de la deuxième chambre d'équilibrage 17b. Sous l'action de la pression $p_1$ s'exerçant sur la tête de soupape 29, la soupape mobile 28 peut s'ouvrir de façon qu'un écoulement du fluide hydraulique traverse la valve de commande 10 afin de revenir dans la deuxième chambre 2b.

Tant que la différence de pression $p_1$-$p_2$ entre l'entrée et la sortie de la valve de commande 10 reste constante, on comprend qu'aucun débit de fluide ne traverse la restriction 21 qui fait partie des moyens de filtrage 16 et qui est associée à la chambre d'équilibrage 17, étant donné que les moyens de filtrage 16 sont montés en parallèle sur la valve 10. De plus, en l'absence de débit à travers la restriction 21, la pression $p_1$ règne dans la première chambre d'équilibrage 17a. Le ressort 19 équilibre la différence de pression $p_1$-$p_2$ entre les deux chambres d'équilibrage 17a et 17b.

En revanche, dès que la différence de pression $p_1$-$p_2$ entre l'entrée et la sortie de la valve de commande 10 varie, il en résulte un faible débit de fluide hydraulique traversant la restriction 21, qui définit alors, en aval de cette restriction, une pression de commande $p_3$ qui s'exerce dans la première partie 17a de la chambre d'équilibrage 17. Cette pression de commande est amenée par la canalisation 24 dans la première chambre de régulation 33a.

Il en résulte que le piston de soupape 32 est soumis d'un côté à la pression de commande $p_3$ et de l'autre à la pression $p_1$ grâce à l'existence du passage traversant 35, 36.

On définira par S la section d'appui de la tête de soupape 29 et s la section totale du piston de soupape 32, s'étant inférieure à S, $s_t$ est la section de la tige de soupape 31. Si F est la force exercée sur le piston de soupape 32 par le ressort 34, on peut écrire l'équation d'équilibre de la soupape 28 :

$$F = p_1 S - p_2(S - s_t) + p_1 (s - s_t) - p_3 s \qquad (1)$$

qui peut se transformer sous la forme

$$F = (p_1 - p_2)(S - s_t) + (p_1 - p_3) s \qquad (2)$$

La force F tend à appuyer la soupape 28 sur son siège 30 et définit ainsi la loi d'amortissement de l'amortisseur.

La variation de la force de compression induit un débit de fluide hydraulique dans le moyen de filtrage 16 qui est proportionnel à la variation ou à la dérivée de la différence de pression $p_1 - p_2$. générant une pression de commande $p_3$ qui s'exerce sur la soupape mobile 28 de la valve de commande 10. On obtient ainsi un effet de filtrage régulant la différence de pression $p_1 - p_2$ et filtrant les hautes fréquences s'exerçant sur l'amortisseur.

La valve de commande 10 se trouve ainsi pilotée en fonction des variations de la vitesse d'enfoncement de la tige 3 à l'intérieur du cylindre 2.

Lors d'un mouvement inverse, c'est-à-dire un mouvement de détente, pour lequel le piston principal 1 et la tige 3 sont extraits du cylindre 2, le fluide hydraulique s'écoule par la canalisation 39 depuis la deuxième chambre 2b vers la première chambre 2a. La réalimentation en fluide hydraulique en provenance du réservoir 6 pour compenser la diminution du volume de la tige 3 à l'intérieur du cylindre 2 se fait par la canalisation 37 en traversant le clapet anti-retour 38. La pression du fluide hydraulique de réalimentation s'exerce également dans la deuxième partie 17b de la chambre de filtrage 17, de façon à faire revenir le piston 18 dans sa position d'origine pendant la phase de détente.

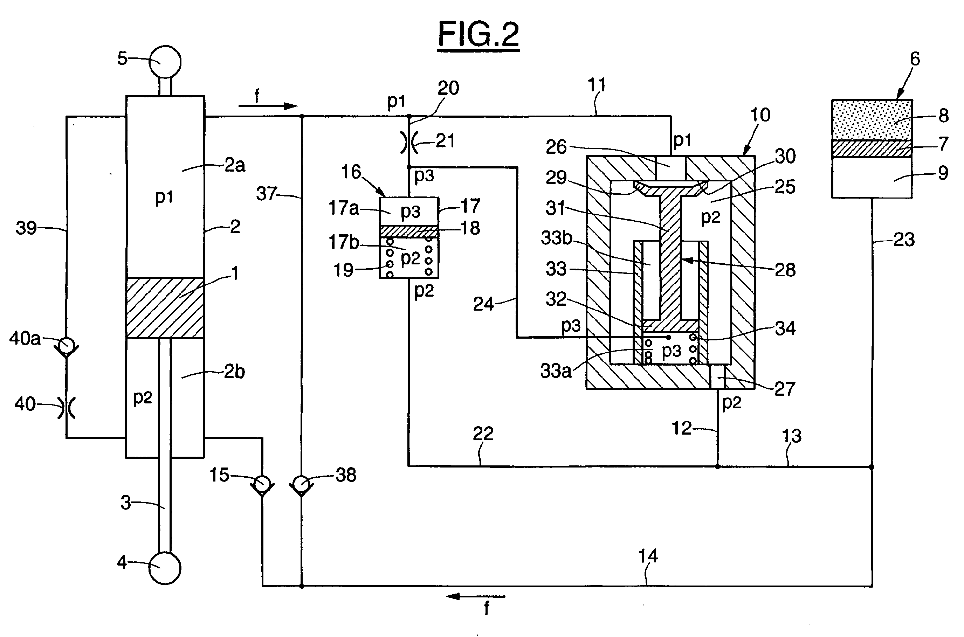

Le mode de réalisation illustré sur la figure 2, sur laquelle les pièces et organes analogues portent les mêmes références, se différencie uniquement du mode de réalisation de la figure 1 par la structure interne de la valve de commande 10.

Dans le mode de réalisation illustré sur la figure 2, en effet, la soupape mobile 28 comporte une tige 31 dénuée de passage traversant. Le cylindre de régulation 33 est ouvert à la partie supérieure, de sorte que le piston de soupape 32 ne définit qu'une seule chambre de régulation fermée 33a. Soumise, comme précédemment à la pression de commande $p_3$ dans ce mode de réalisation, lors d'un mouvement de compression de l'amortisseur, la pression $p_2$ s'exerce à la fois à l'intérieur de la chambre de commande 25 et sur la partie supérieure du piston de soupape 32.

Lors d'un mouvement de compression, l'équilibre des forces sur la soupape mobile 28 s'écrit

$$F = p_1 S - p_2(S - s_t) + p_2 (s - s_t) - p_3 s \qquad (3)$$

qui peut se transformer en :

$$F = (p_1 - p_2)(S - s) + (p_1 - p_3) s \qquad (4)$$

Dans ce mode de réalisation, la soupape mobile 28 peut être telle que la différence entre la section d'appui de la soupape S et la section s du piston de soupape 32 soit faible, de façon à contrôler la différence de pression $p_1 - p_2$ au moyen d'une force de ressort F réduite tout en disposant d'une tête de soupape 29 de grande dimension, permettant un débit important lorsque la valve de commande 10 est ouverte.

Le mode de réalisation illustré sur la figure 2 fonctionne de la même façon que le mode de réalisation illustré sur la figure 1.

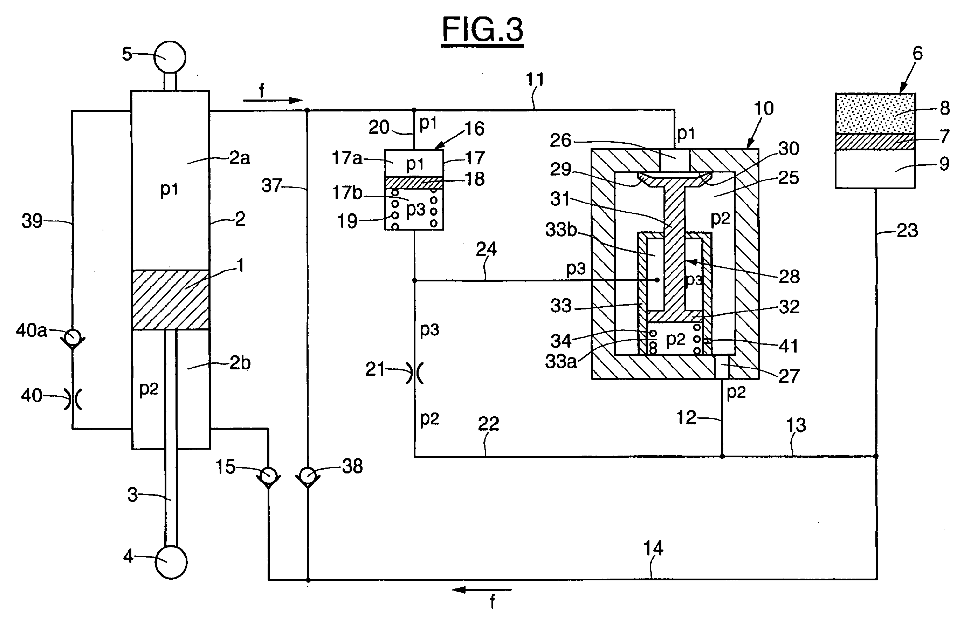

Le mode de réalisation illustré sur la figure 3 se différencie du mode de réalisation illustré sur la figure 1 par la disposition de la restriction de filtrage 21 sur la canalisation 22 et non plus sur la canalisation 20, c'est-à-dire à la sortie de la deuxième partie 17b de la chambre d'équilibrage 17. De plus, la conduite d'équilibrage 24 relie ici la deuxième partie 17b de la chambre d'équilibrage 17 à la deuxième chambre 33b du cylindre de régulation 33 de la valve de commande 10.

De cette manière, lors d'un mouvement de compression de l'amortisseur et dans les mêmes conditions que pour le mode de réalisation de la figure 1, un débit s'établit à travers la restriction 21 lors d'une variation de la différence de pression $p_1$-$p_2$ entre l'entrée et la sortie de la valve de commande 10. La pression de commande $p_3$ en résulte grâce à la restriction 21, est amenée par la conduite d'équilibrage 24 dans la deuxième chambre 33b.

Un passage 41 pratiqué dans la paroi du cylindre de régulation 33 met en communication la première chambre de régulation 33a avec la chambre de commande 25, de sorte que la pression $p_2$ qui règne, lors d'un mouvement de compression, dans ladite chambre de commande 25, s'exerce également dans la première chambre de régulation 33a.

Dans le mode de réalisation illustré sur la figure 3, la tige de soupape 31 ne comporte aucun passage traversant et le cylindre de régulation 33 est fermé, à part le passage 41.

Lors d'un mouvement de compression, l'équilibre des forces sur la soupape mobile 28 est défini par l'équation

$$F = p_1\, S - p_2\, (S\text{-}s_t) + p_3\, (s\text{-}s_t) - p_2\, s \qquad (5)$$

qui se transforme en

$$F = (p_1\text{-}p_2)\, S + (p_3\text{-}p_2)\, (s\text{-}s_t) \qquad (6)$$

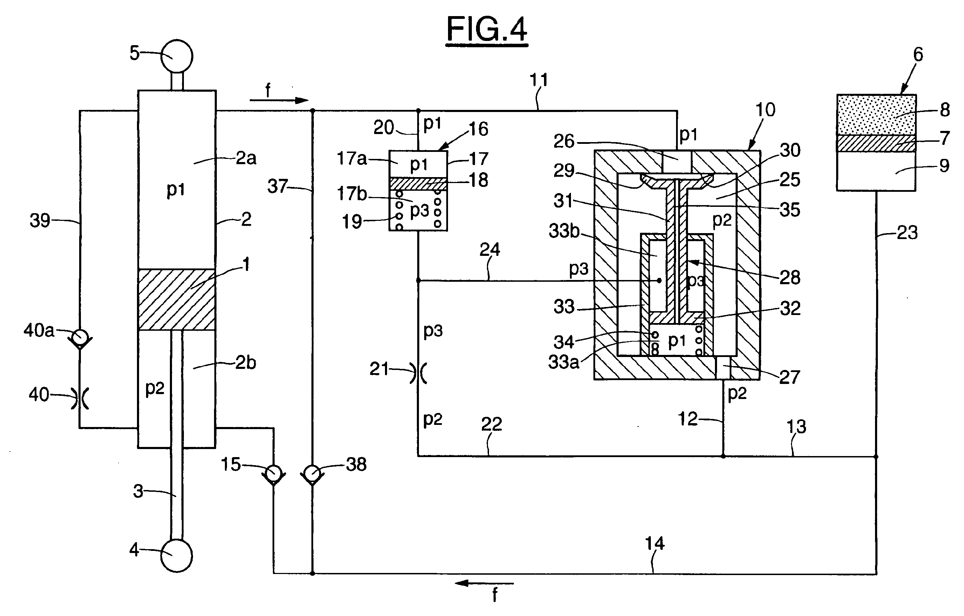

Dans le mode de réalisation illustré sur la figure 4, les moyens de filtrage 16 sont identiques à ceux illustrés sur la figure 3, c'est-à-dire que la restriction d'équilibrage 21 est disposée à la sortie de la chambre d'équilibrage 17 sur la canalisation 22. La structure générale de la valve de commande 10 est très similaire à celle de la valve de commande 10 du mode de réalisation illustré sur la figure 3. Toutefois, dans le mode de réalisation illustré sur la figure 4, la tige de soupape 31 comporte un passage traversant 35 qui met en communication la face externe de la tête de soupape 29, avec cette fois, la première chambre de régulation 33a, à l'intérieur de laquelle règne donc la pression $p_1$, lors d'un mouvement de compression,. Le cylindre de régulation 33 est fermé, de sorte que la deuxième chambre 33b est soumise à la pression de commande $p_3$, tandis que la chambre de commande 25 est soumise à la pression $p_2$.

Lors d'un mouvement de compression, l'équilibre des forces sur la soupape mobile 28 est défini par l'équation

$$F = p_1\, S - p_2\, (S\text{-}s_t) + p_3\, (s\text{-}s_t) - p_1 s \qquad (7)$$

qui se transforme en

$$F = (p_1\text{-}p_2)\, (S\text{-}s) + (p_3\text{-}p_2)\, (s\text{-}s_t) \qquad (8)$$

Le mode de réalisation illustré sur la figure 4 permet d'obtenir les mêmes résultats avantageux que pour le mode de réalisation illustré sur la figure 2.

Dans les modes de réalisation illustrés sur les figures 1 à 4, la soupape mobile de la valve de commande 10 est soumise à l'action d'un ressort. Il est possible également de générer une force hydraulique agissant dans les mêmes conditions sur la soupape mobile.

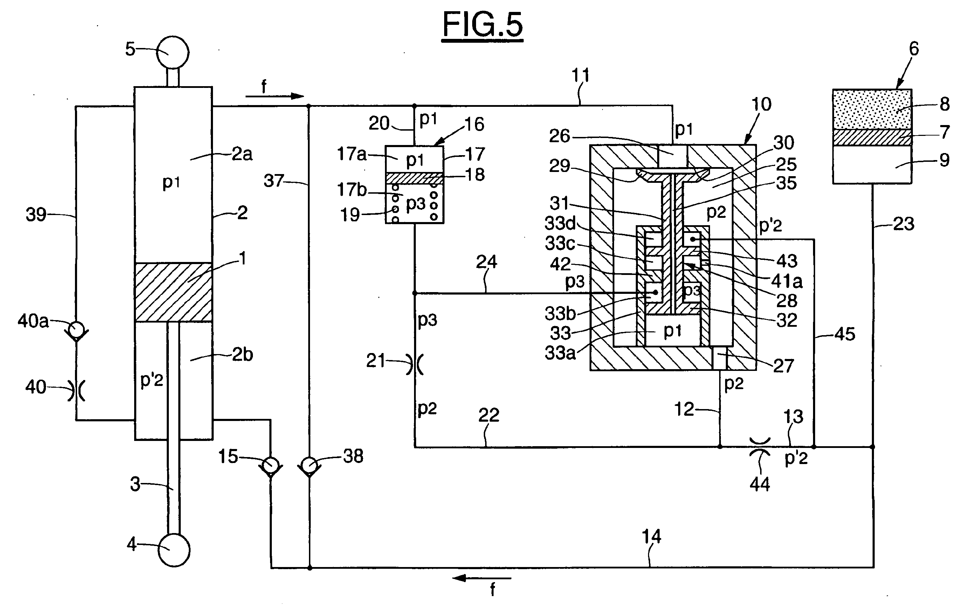

Les modes de réalisation illustrés sur les figures 5, 6, 7 et 8 illustrent cette situation.

Dans le mode de réalisation de la figure 5, les moyens de filtrage 16 sont les mêmes que dans le mode de réalisation illustré sur la figure 4 et comprennent en particulier une chambre d'équilibrage 17 et une restriction de filtrage 21 sur la conduite 22.

Dans le mode de réalisation illustré sur la figure 5, le passage traversant 35 pratiqué dans la tige de soupape 31, met en communication la surface externe de la tête de soupape 29 du côté de son siège 30 avec la première chambre de régulation fermée 33a définie à l'intérieur du cylindre de régulation 33. Le cylindre de régulation 33 comprend une paroi de séparation 42 qui divise le cylindre de régulation 33 deux parties, l'une contenant le piston de soupape 32 et l'autre contenant un piston auxiliaire 43 solidaire de la tige de soupape 31. Le piston auxiliaire 43 définit dans le cylindre de régulation 33 une troisième et une quatrième chambres de régulation 33c, 33d. De plus, un passage 41a est prévu dans la paroi du cylindre de régulation 33 de façon à faire communiquer la chambre de commande 25 avec la troisième chambre de régulation 33c qui est également délimitée par la paroi 42.

La conduite d'équilibrage 24 relie la sortie de la chambre d'équilibrage 17 du côté de la deuxième partie 17b de celle-ci avec la deuxième chambre de régulation 33b. Une restriction supplémentaire 44 est montée dans la conduite 13 à la sortie de la valve de commande 10, entre la valve 10 et la deuxième chambre 2b du cylindre 2. La pression en aval de la restriction 44 est amenée par la conduite 45 dans la quatrième chambre de régulation 33d.

De cette manière, en cas de mouvement de compression, la pression régnant à l'entrée de la valve de commande 10 est la pression $p_1$ qui est également appliquée dans la première chambre de régulation 33a. La deuxième chambre de régulation 33b est soumise à la pression de commande $p_3$ générée en amont de la restriction 21 à la sortie de la chambre d'équilibrage 17 lors d'une variation de la différence de pression $p_1$-$p_2$. La pression $p_2$ règne à la sortie de la valve de commande 10 ainsi qu'à l'intérieur de la chambre de commande 25, et dans la troisième chambre d'équilibrage 33c. En aval de la restriction supplémentaire 44, se trouve alors définie une pression $p'_2$ qui est appliquée à l'intérieur de la quatrième chambre de commande 33d et que l'on retrouve également dans la deuxième chambre 2b du cylindre 2.

L'équilibre de la soupape mobile 28 lors d'un mouvement de compression peut être défini par l'équation suivante :

$$P_1(S\text{-}s) - p_2(S\text{+}s - 2\,s_t) + p'_2(s\text{-}s_t) + p_3(s\text{-}s_t) = 0 \qquad (9)$$

qui se transforme en l'équation

décrits. Dans ce mode de réalisation, c'est donc la restriction supplémentaire 44 qui génère indirectement la force hydraulique tendant à fermer la valve de commande 10. Le ressort 34 des modes de réalisation précèdents, qui avait la même fonction, peut donc être supprimé.

La restriction supplémentaire 44, disposée dans le mode de réalisation de la figure 5, entre la valve de commande 10 et la deuxième chambre 2b du cylindre 2, peut également être disposée différemment.

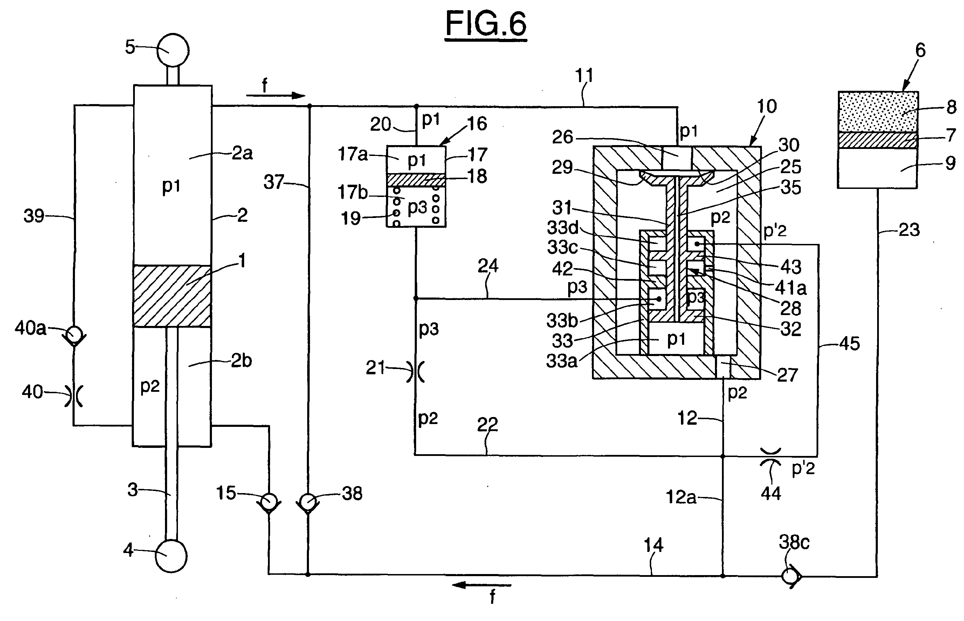

La figure 6 illustre une telle variante dans laquelle les pièces identiques portent les mêmes références que sur la figure 5. Dans ce mode de réalisation, une liaison supplémentaire 12a relie la sortie 27 de la valve de commande 10 à la deuxième chambre 2b du cylindre 2 par l'intermédiaire du clapet anti-retour 15. Un clapet anti-retour 38c oblige l'écoulement du fluide en direction du réservoir à passer par la restriction 44. La restriction supplémentaire 44, qui joue le même rôle que dans le mode de réalisation de la figure 5 et remplace de ce fait le ressort 34, est disposée ici dans la canalisation 13 à travers laquelle s'écoule le fluide hydraulique qui retourne vers le réservoir 6. Dans ce mode de réalisation, la pression régnant dans la deuxième chambre 2b du cylindre 2 est la pression $p_2$.

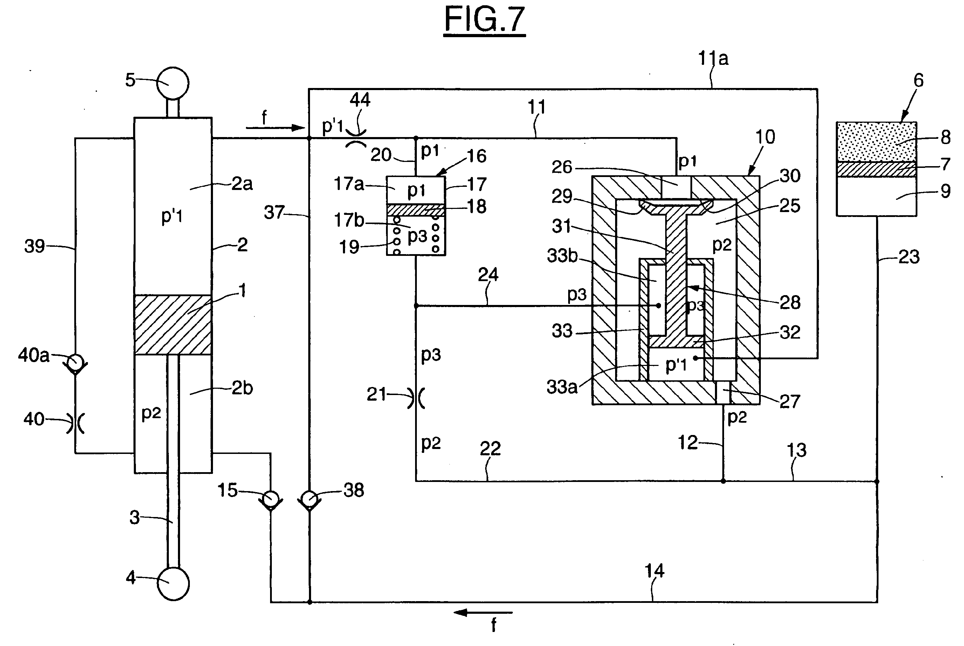

Une autre disposition de la restriction supplémentaire 44 est illustré sur la figure 7 qui constitue une variante similaire à celle illustrée sur la figure 3. Les pièces identiques portent les mêmes références. Dans cette variante, la restriction supplémentaire 44 est disposée dans la conduite 11, en amont des moyens de filtrage 16, c'est-à-dire entre la première chambre 2a du cylindre 2 et la valve de commande 10. La restriction 44 génère ainsi une pression $p'_1$ qui est transmise par une conduite supplémentaire 11a jusque dans la première chambre de régulation 33a. Dans ce mode de réalisation, la première chambre de régulation 33a est une chambre fermée et ne contient pas de ressort 34.

Comme dans le cas des modes de réalisation illustrés sur les figures 5 et 6, la restriction supplémentaire 44 permet donc de générer une force hydraulique tendant à fermer la valve de commande 10, c'est-à-dire agissant sur la soupape mobile 28 dans le sens qui tend à l'appuyer sur son siège 30.

L'équilibre de la soupape mobile 28 lors d'un mouvement de compression peut être défini par l'équation suivante :

$$p_1 S\text{-}p_2(S\text{-}st)\text{+}p_3(s\text{−}st)\text{-}p_1{}'s = 0 \qquad (11)$$

qui se transforme en l'équation :

$$(p_1\text{-}p_2)(S\text{-}s)\text{+}(p_3\text{-}p_2)(s\text{−}st) = (p_1{}'\text{-}p_1)s \qquad (12)$$

dans laquelle le terme $(p_3\text{-}p_2)(s\text{-}st)$ représente la fonction de filtrage tandis que le terme $(p_1{}'\text{-}p_1)s$ représente la force hydraulique générée par la restriction supplémentaire 44.

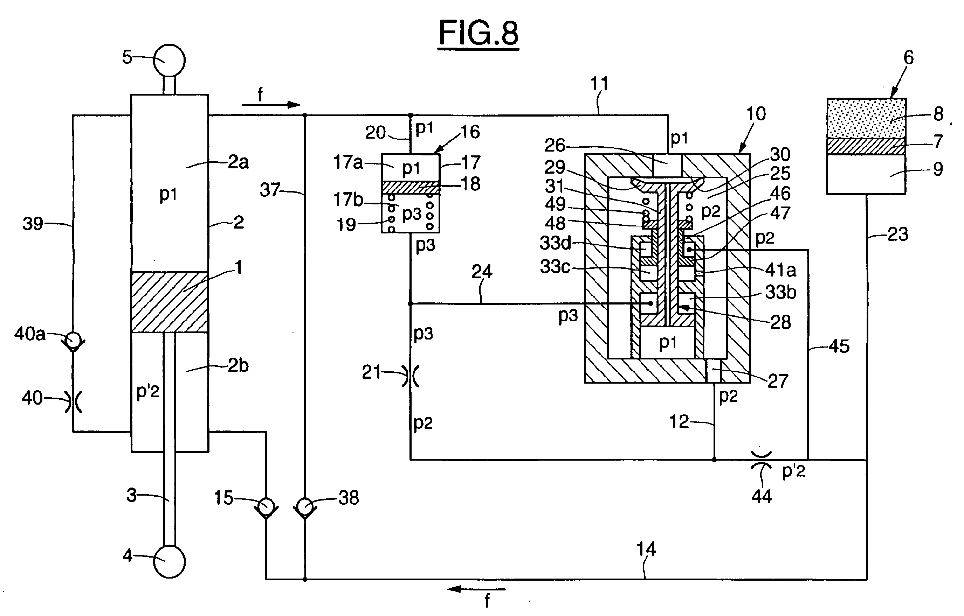

Le mode de réalisation illustré sur la figure 8 constitue une autre variante du mode de réalisation illustré sur la figure 5. La force agissant sur la soupape mobile est également créée de manière hydraulique mais, cette fois, est transmise à la soupape mobile par l'intermédiaire d'un ressort afin d'éviter des fluctuations à haute fréquence de cette force dans le cas où des turbulences hydrauliques apparaîtraient dans la restriction 44. Cet effet complète celui des moyens de filtrage 16, en particulier dans la partie haute du spectre des fréquences.

Comme illustré sur la figure 8, sur laquelle les pièces identiques à celles déjà illustrées sur la figure 5 portent les mêmes références, un manchon 46 est monté coulissant le long de la tige de soupape 31. Le manchon 46 présente un épaulement formant piston auxiliaire 47 qui remplace en quelque sorte le piston auxiliaire 43 illustré sur la figure 5, lequel était solidaire de la tige de soupape 31. Le piston auxiliaire 47 sépare ainsi la troisième chambre de régulation 33c de la quatrième chambre de régulation 33d, dans les mêmes conditions que pour le piston auxiliaire 43 du mode de réalisation illustré sur la figure 5. La partie du manchon 46 qui coulisse le long de la tige 31 vient s'appuyer sur une rondelle 48 qui sert de support à un ressort 49, lequel s'appuie sous la tête de soupape 29.

La force R du ressort de compression 49 vient donc équilibrer la force hydraulique générée par la restriction 44 selon l'équation

$$R = (p_2 - p'_2)(s - s_p) \qquad (13)$$

où $s_p$ est la section du manchon 46 entourant la tige de soupape 31.

La force R du ressort 49 s'oppose en outre à l'ouverture de la valve 10, c'est-à-dire au décollement du siège de soupape 29 de son siège 30. L'équilibre de ces forces à cet égard peut s'écrire :

$$R = p_1(S - s) - p_2(S - s_t) + p_3(s - s_t) \qquad (14)$$

qui se transforme sous la forme suivante

$$R = (p_1 - p_2)(S - s) + (p_3 - p_2)(s - s_t) \qquad (15)$$

Dans cette équation, le terme $(p_3 - p_2)(s - s_t)$ représente l'effet de filtrage et on obtient finalement le même effet que dans le mode de réalisation de la figure 4, mais avec en outre un filtrage des hautes fréquences par le ressort 49.

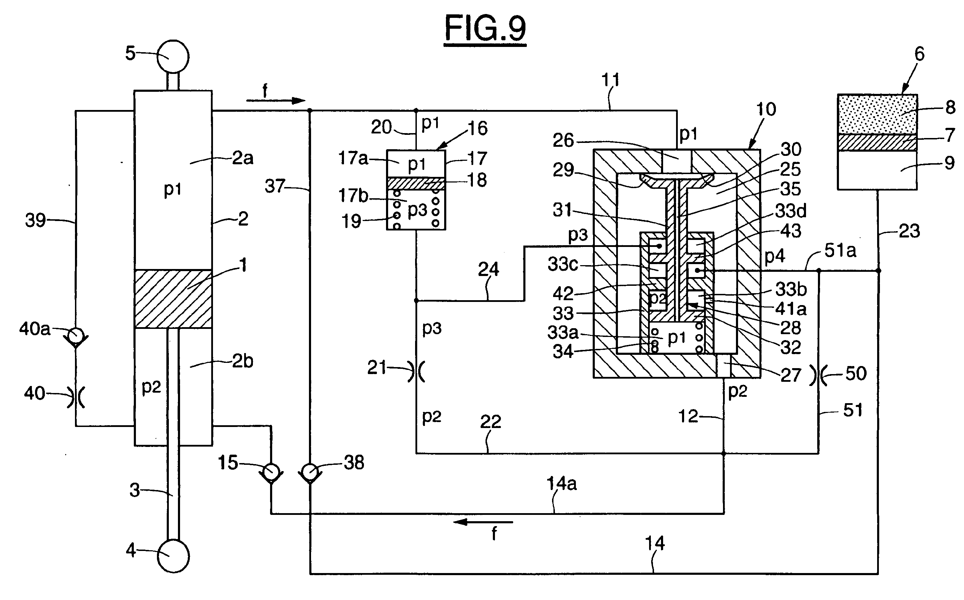

Le mode de réalisation illustré sur la figure 9 sur laquelle les éléments identiques aux précédents portent les mêmes références, comporte un ressort 34 agissant sur la soupape mobile 28 comme c'était le cas dans les modèles de réalisation des figures 1 à 4. Pour le reste, le mode de réalisation de la figure 9 présente des similitudes avec le mode de réalisation de la figure 5, avec les modifications suivantes.

La conduite de filtrage 24 véhiculant la pression de commande de filtrage $p_3$ est reliée à la quatrième chambre 33d.

Une restriction supplémentaire 50 est montée dans une conduite 51 qui est reliée, d'une part, par la conduite 12 à la sortie de la valve de commande 10 et, d'autre part, à la conduite 23 de retour au réservoir 6. La restriction 50 est donc traversée par l'écoulement de fluide hydraulique revenant vers le réservoir 6 lors d'un mouvement de compression de l'amortisseur entraînant une plus grande pénétration de la tige 3 à l'intérieur du cylindre 2. En aval de la restriction 50, lors d'un mouvement de compression, se trouve définie une pression $p_4$ qui est appliquée par la canalisation 51a dans la troisième chambre de régulation 33c, laquelle, dans le mode de réalisation illustré sur la figure 9, est une chambre fermée qui n'est donc pas en communication avec la chambre de commande 25 à la pression $p_2$.

La deuxième chambre de régulation 33b présente un passage 41a, la mettant en communication avec la chambre de commande 25, de sorte que la pression $p_2$ règne dans ladite deuxième chambre de régulation 33b. Un ressort 34 est monté dans la première chambre de régulation 33a de façon à agir sur le piston de soupape 32, tendant à fermer la valve de commande 10.

Enfin, une canalisation supplémentaire 14a reliée à la canalisation 12 à la sortie de la valve de commande 10 permet le retour de l'écoulement de fluide hydraulique vers la deuxième chambre 2b du cylindre 2 en passant par le clapet anti-retour 15. Dans le mode de réalisation illustré sur la figure 9, la restriction 50 génère une pression $p_4$, capable d'ouvrir la valve de commande 10 lors des fortes vitesses de compression de la tige 3 de l'amortisseur. On obtient ainsi une décroissance de la force d'amortissement aux hautes vitesses de compression.

Les forces agissent sur la soupape mobile 28, dans le mode de réalisation de la figure 9, s'expriment par l'équation :

$$R = p_1 S - p_2(S-st) + (p_2-p_4)(s-st) + p_3(s-st) - p_1 s \qquad (16)$$

qui peut se transformer sous la forme suivante :

$$R = (p_1-p_2)(S-s) + (p_3-p_2)(s-st) + (p_2-p_4)(s-st) \qquad (17)$$

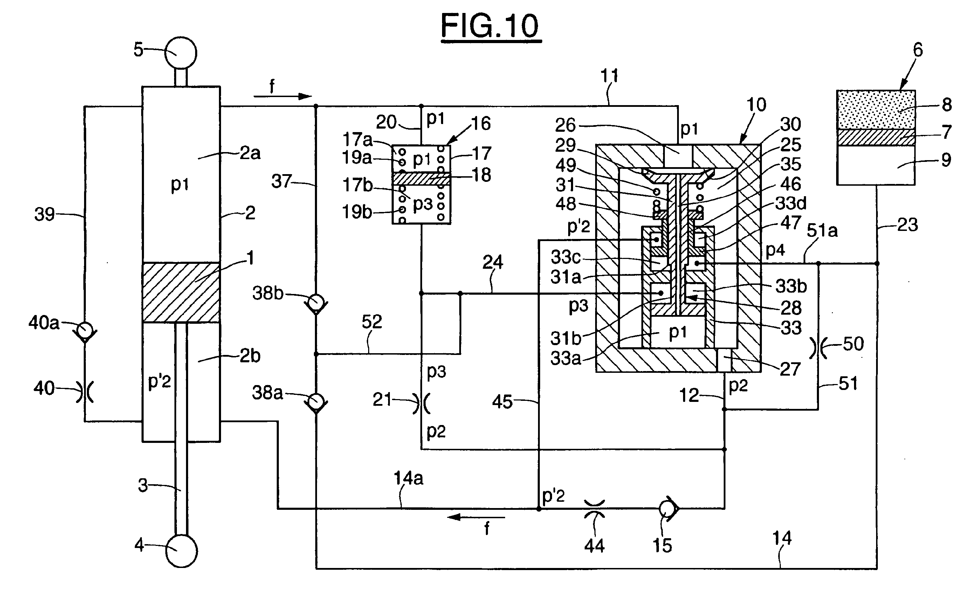

Le mode de réalisation illustré sur la figure 10 est similaire dans son principe au mode de réalisation illustré sur la figure 9, mais avec quelques modifications. Les éléments identiques ou similaires aux modes de réalisation précédents portent les mêmes références.

Le piston mobile 18 de la chambre d'équilibrage 17 est ici soumis à l'action antagoniste de deux ressorts 19a et 19b disposés de part et d'autre du piston mobile 18. De cette manière, il est possible de faire travailler les deux ressorts dans la partie linéaire de leur caractéristique. En pratique, l'un des ressorts, par exemple le ressort 19b, est de raideur plus importante que le deuxième, le ressort 19a.

On comprendra qu'une telle structure puisse être utilisée dans les modes de réalisation décrits précédemment.

La restriction 44 est également utilisée dans ce mode de réalisation pour définir la pression $p'_2$ lorsque le fluide hydraulique sortant de la valve de commande 10 à la pression $p_2$ s'écoule en direction de la deuxième chambre 2b de l'amortisseur 2, dans laquelle règne la pression $p'_2$. Comme précédemment la restriction 44 engendre une force hydraulique tendant à fermer la valve de commande, sans nécessiter l'adjonction d'un ressort d'appel.

Le clapet anti-retour 15 des modes de réalisation précédents, et en particulier du mode de réalisation illustré sur la figure 9, a été déplacé de façon à se situer en amont de l'écoulement du fluide par rapport à la restriction 44 lors d'un mouvement de compression. Il s'agit là d'une simple modification de construction qui pourrait bien entendu être utilisée dans tous les modes de réalisation précédemment décrits.

La troisième restriction 50 est montée dans une conduite 51 qui est reliée, d'une part, par la conduite 12 à la sortie de la valve de commande 10 et, d'autre part, à la conduite 23 de retour au réservoir 6. La restriction 50 est donc traversée par l'écoulement de fluide hydraulique revenant vers le réservoir 6 lors d'un mouvement de compression de l'amortisseur entraînant une plus grande pénétration de la tige 3 à l'intérieur du cylindre 2. En aval de la restriction 50, lors d'un mouvement de compression, se trouve définie une pression $p_4$ qui est appliquée par la canalisation 51a dans la troisième chambre de régulation 33c, laquelle, dans le mode de réalisation illustré sur la figure 10, est une chambre fermée qui n'est donc pas en communication avec la chambre de commande 25 à la pression $p_2$. Comme dans le mode de réalisation de la figure 9, la restriction 50 génère donc une pression tendant à ouvrir la valve de commande lors des hautes vitesses de compression.

La tige de soupape 31 présente, dans ce mode de réalisation, un épaulement 31a qui définit une portion inférieure 31b de la tige de soupape 31, de diamètre inférieur à la portion supérieure. L'épaulement 31a , reste en fonctionnement, à l'intérieur de la troisième chambre de régulation 33c.

Le clapet anti-retour 38 des modes de réalisation précédents est, dans le mode de réalisation illustré sur la figure 10, remplacé par deux clapets anti-retour 38a, 38b placés en série. Une liaison 52 branchée entre les deux clapets anti-retour 38a, 38b est reliée à la conduite 24, elle-même connectée à la sortie de la chambre d'équilibrage 17 et transmettant la pression de commande $p_3$ à la deuxième chambre de régulation 33b. Cette disposition permet, lors du mouvement de détente de l'amortisseur, un retour du fluide en provenance du réservoir 6, la valve de commande 10 et les moyens de filtrage 16 ne jouant alors aucun rôle. De cette manière, le fluide réalimente la première chambre 2a et compense ainsi la diminution du volume immergé de la tige 3. Cette disposition permet également de faciliter le retour du piston mobile 18 de la chambre d'équilibrage 17 à sa position de repos en équilibre entre les deux ressorts 19a, 19b.

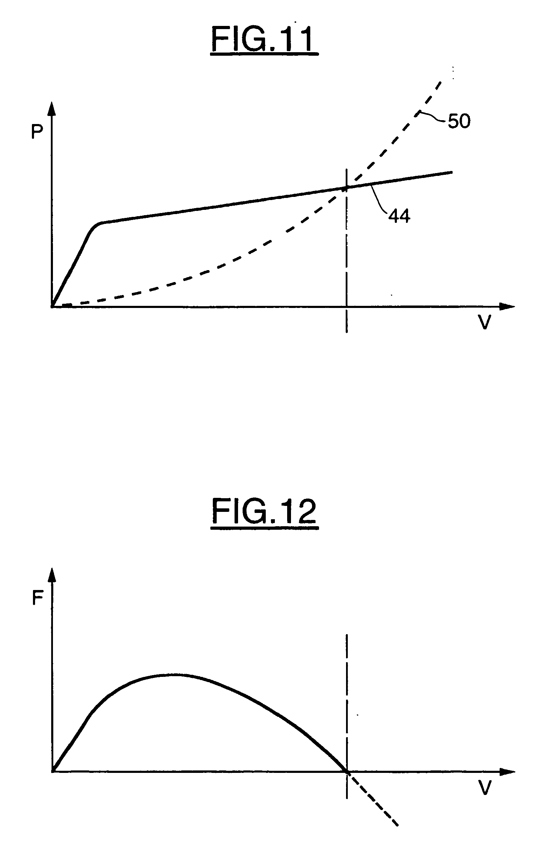

Dans ce mode de réalisation, on choisit de préférence les deux restrictions 44 et 50, de façon qu'elles présentent des caractéristiques différentes. Les courbes illustrées sur la figure 11 montrent les caractéristiques respectives des restrictions 44 et 50 respectivement en traits pleins et en tirets. La chute de pression P est représentée en ordonnées et la vitesse V du mouvement de compression en abscisses.

La restriction 44 est choisie de façon à créer une chute de pression P qui augmente tout d'abord très rapidement pour les petites valeurs de la vitesse de compression correspondant à de petites valeurs de débit traversant la restriction. Puis, cette chute de pression croît ensuite très lentement. On peut facilement réaliser une telle caractéristique en utilisant par exemple une mince feuille métallique de clinquant précontrainte au moyen d'un système de ressort.

La restriction 50, au contraire, est choisie de façon à présenter une caractéristique dans laquelle la chute de pression P croît lentement pour les faibles débits correspondants à de faibles vitesses de compression, puis croît plus rapidement lorsque la vitesse et le débit augmentent. On obtient aisément une telle caractéristique en utilisant un orifice calibré.

En faisant agir les pressions $p'_2$ et $p_4$ générées respectivement par les deux restrictions 44 et 50 sur les faces opposées du piston auxiliaire 47, c'est-à-dire dans la quatrième chambre de régulation 33b et dans la troisième chambre de régulation 33c, on crée une force par des moyens hydrauliques qui augmente rapidement avec la vitesse du mouvement de compression, passe par un maxima, pour ensuite décroître et changer de sens provoquant l'ouverture de la valve de commande 10. La figure 12 illustre les variations de la force d'amortissement F en fonction de la vitesse du mouvement de compression V. La partie de la courbe en tirets n'a pas d'intérêt pratique, la valve de commande 10 étant alors en position complètement ouverte. On obtient ainsi une force d'amortissement qui croît avec la vitesse de compression pour les faibles vitesses, puis passe par un maximum et décroît aux fortes vitesses de compression. Cela est particulièrement intéressant lorsqu'on souhaite que des dégradations localisées de la surface de la chaussée ne provoquent pas de trépidations ou de chocs sur la caisse du véhicule.

On comprendra bien entendu que le même avantage pourrait être obtenu au moyen d'une disposition analogue des deux restrictions 44 et 50 dans une structure de valve de commande telle qu'illustrée sur la figure 9, dans laquelle les forces hydrauliques sont appliquées directement sur le piston auxiliaire 43 solidaire de la tige de soupape 31.

L'équilibre des forces s'exerçant sur la soupape mobile 28 du mode de réalisation illustré sur la figure 10, est défini de la manière suivante, où R est la force du ressort 49, s, est la petite section de la tige de soupape 31 et S, est la grande section de la tige de soupape 31 :

$$R = p_4 \, (s\text{-}S_t) - p_2 \, (s_p\text{-}S_t) - p'_2 \, (s\text{-}s_p) \qquad (18)$$

qui peut s'écrire

$$R = (p_2\text{-}p'_2) \, (s\text{-}s_p) - (p_2\text{-}p_4) \, (s\text{-}S_t) \qquad (19)$$

Dans cette équation, on voit apparaître l'influence, par le terme $(p_2\text{-}p'_2)$ de la restriction 44 et celle de la restriction 50 par le terme $(P_2\text{-}P_4)$.

La force R du ressort est équilibrée hydrauliquement, comme le montre l'équation suivante :

$$R = p_1 \, (S\text{-}s) + p_3 \, (s\text{-}s_t) - p_4 \, (S_t\text{-}s_t) - p_2 \, (S\text{-}S_t) \qquad (20)$$

qui peut se transformer en

$$R = (p_1\text{-}p_2) \, (S\text{-}s) + (p_3\text{-}p_2) \, (s\text{-}s_t) + (p_2\text{-}p_4) \, (S_t\text{-}s_t) \qquad (21)$$

dans laquelle le premier terme représente la force principale d'amortissement, le deuxième terme exprime l'effet de filtrage et le troisième terme représente une décroissance de la force d'amortissement pour les très grandes vitesses de compression.

Il en résulte que l'amortissement diminue aux grandes vitesses du mouvement de compression, à la fois par une action sur le ressort 49 chargé de plaquer la soupape mobile 28 contre son siège 30 et, simultanément, par une action directe sur la tige de soupape 31. En effet, dans le mode de réalisation illustré sur la figure 10, la pression $(p_2\text{-}p_4)$ générée par la restriction 50 agit sur la surface $(S_t\text{-}s_t)$ de façon à écarter la tête de soupape 29 de son siège 30.

On notera que la restriction 50, qui tend à ouvrir la valve de commande 10 à fort débit c'est-à-dire lors des hautes vitesses de compression, peut être disposée, non seulement sur le chemin du réservoir comme illustré sur les figures 9 et 10, mais également entre la valve 10 et la deuxième chambre 2b de l'amortisseur 2, ou encore entre la première chambre 2a et la valve de commande 10.

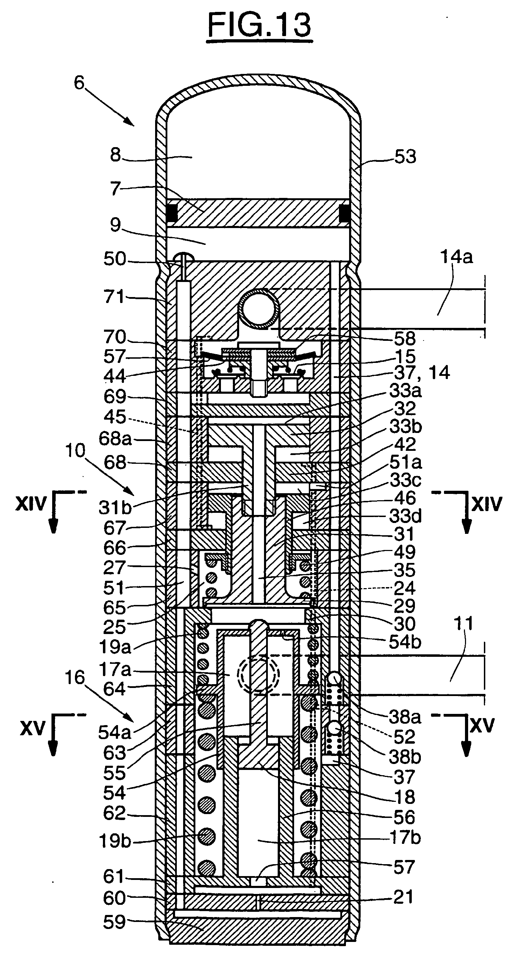

On va maintenant décrire un exemple de réalisation pratique d'une valve de commande associée au moyen de filtrage selon l'invention, illustré sur les figures 13, 14 et 15. Sur ces figures, qui correspondent à la réalisation schématique illustrée sur la figure 10, les mêmes éléments portent les mêmes références.

On retrouve sur la figure 13, à l'intérieur d'un bâti 53, les moyens de filtrage 16, la valve de commande 10 et le réservoir 6, placés les uns au-dessus des autres par rapport à la figure 13. On retrouve également le ressort 19b de plus grande raideur que le ressort secondaire 19a, qui agissent tous deux sur une pièce cylindrique 54 comprenant un épaulement 54a sur lequel viennent prendre appui les ressorts 19a et 19b.

La pièce cylindrique 54 définit à l'intérieur une chambre qui correspond à la première partie 17a de la chambre d'équilibrage 17. Un axe 55, solidaire de la pièce cylindrique 54, présente une partie inférieure de plus grand diamètre qui joue le rôle du piston 18 en coulissant dans une deuxième pièce cylindrique 56, à l'intérieur de laquelle se trouve définie la deuxième partie 17b de la chambre d'équilibrage. La pièce 54 coulisse de manière non étanche sur la pièce 56 et présente, dans sa partie supérieure, un perçage 54b laissant un libre passage du fluide de la chambre 17a vers la valve 31 et la conduite 11. Le fluide hydraulique peut pénétrer dans cette partie 17b par un orifice 57 et traverser ensuite un orifice calibré qui correspond à la restriction 21.

La partie 17a de la chambre d'équilibrage à l'intérieur de la pièce cylindrique 54, est en communication par la conduite 11 avec la première chambre de l'amortisseur, non illustré sur la figure 13.

On retrouve également sur la figure 13, la tige de soupape 31 avec la tête de soupape 29 qui peut venir s'appliquer sur son siège 30. Le piston de soupape 32 est défini dans un élément vissé sur la tige de soupape 31 et de diamètre inférieur à celle-ci. La cloison de séparation 42 délimite également, comme dans le mode de réalisation illustré sur la figure 10, une troisième chambre de régulation 33c et une deuxième chambre de régulation 33b. On retrouve encore la première chambre de régulation 33a et la quatrième chambre de régulation 33d. Le manchon mobile 46 coulisse le long de la partie de plus grand diamètre de la tige de soupape 31 et agit sur la tête de soupape 29 par l'intermédiaire du ressort 49.

On note également, sur la figure 13, le clapet anti-retour 15 et la restriction 44 comprenant un clinquant mobile 57 serré entre plusieurs rondelles métalliques 58. Le retour du fluide hydraulique vers la deuxième chambre de l'amortisseur se fait par la conduite 14a qui est en communication avec une chambre en aval de la restriction 44.

Les différents organes ainsi définis sont réalisés en superposant l'intérieur du bâti 53 d'un certain nombre de pièces annulaires convenablement percées d'orifices appropriés.

On retrouve ainsi, à partir du bas sur la figure 13 : une première pièce 59 formant bouchon d'extrémité ; une deuxième pièce 60 présentant la restriction 21 ; une troisième pièce 61 comportant l'orifice 57 et la partie cylindrique 56 ; une quatrième pièce 62, une cinquième pièce 63 comportant, en outre, le clapet anti-retour 38b ; une sixième pièce 64 comportant le clapet anti-retour 38a ; une septième pièce 65 qui délimite la chambre de commande 25 ; une huitième pièce 66 qui délimite le cylindre de régulation 33 de la figure 8 ; une neuvième pièce 67 qui définit une partie du cylindre de régulation 33 ; une dixième pièce 68 qui constitue la séparation 42 ; une onzième pièce 69 qui délimite la première chambre de régulation 33a du cylindre de régulation 33 ; une douzième pièce 70 qui contient des passages associés au clapet anti-retour 15 et à la restriction 44 ; une treizième pièce 71 sur laquelle est logée la restriction 50 ; et enfin le piston mobile 7 séparant dans le réservoir 6, la partie 8 remplie de gaz de la partie remplie 9 de fluide.

On voit également sur la figure 13, la conduite de liaison 51 qui est réalisée par des perçages des différentes pièces précitées parallèlement à l'axe. On voit également représenté le conduit de liaison 37, 14, réalisé de la même manière et sur lequel sont montés les deux clapets anti-retour 38a et 38b et relié d'une part au réservoir 6 et d'autre part au passage 37. On voit également la conduite de filtrage 24 en pointillés, connectée au passage 52 branché entre les deux clapets 38a, 38b et débouchant dans la chambre 33b.

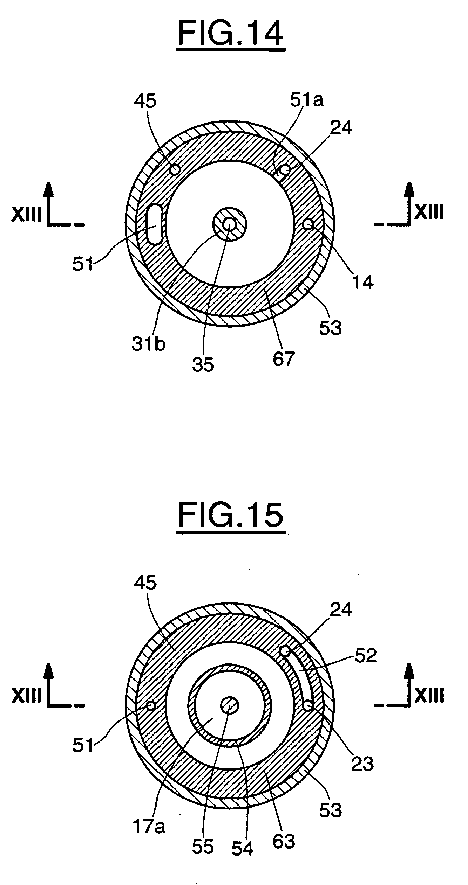

Les vues en coupe des figures 14 et 15 montrent également le conduit de liaison 45 représenté en tirets sur la figure 13, la conduite de filtrage 24 et la conduite 14. On voit sur la figure 14 le passage 51a qui fait communiquer la conduite 24 avec la chambre 33c. Sur la figure 15 on voit la conduite 23, qui est reliée avec la conduite 24 par le passage 52 et avec le réservoir 6. La conduite 23 est en outre reliée à la conduite 14 visible sur la figure 15.

L'étanchéité interne est obtenue en pressant les différentes pièces les unes contre les autres dans l'assemblage final.

L'étanchéité vis-à-vis de l'extérieur est obtenue, par exemple, par soudure de l'enveloppe extérieure 53 sur le bouchon de fermeture 59.

Dans la description des exemples qui précèdent, la compression de l'amortisseur correspondait à une compression de la suspension du véhicule. On comprendra que l'invention s'appliquerait sans modification majeure au cas d'une suspension inversée dans laquelle la compression de la suspension correspondrait à l'extension de l'amortisseur.

**Revendications**

1. Amortisseur, notamment pour véhicule automobile, comprenant un cylindre (2) contenant un fluide hydraulique, un piston principal (1) actionné par une tige (3) définissant dans le cylindre une première chambre (2a) et une deuxième chambre (2b), ladite deuxième chambre contenant la tige, un réservoir de fluide hydraulique (6) et une valve (10) placée dans l'écoulement du fluide hydraulique entre la première chambre et la deuxième chambre, ladite valve comportant une soupape mobile (28) coopérant avec un siège (30) et des moyens tendant à appliquer la soupape sur son siège, ainsi qu'une chambre d'équilibrage (17) divisée en deux parties par un piston mobile (18) soumis à l'action d'un moyen de ressort d'équilibrage (19); et une restriction de filtrage (21) montée entre l'une des parties de la chambre d'équilibrage et la valve pour générer une pression de commande de filtrage agissant sur la soupape de la valve, la pression de commande dépendant de la variation de la différence de pression à l'entrée et à la sortie de la valve, **caractérisé par le fait que** la pression de commande de filtrage régnant dans une partie de la chambre d'équilibrage est amenée à la soupape mobile de la valve par une conduite d'équilibrage (24)

2. Amortisseur selon la revendication précédente **caractérisé par le fait que** la soupape mobile (28) de la valve (10) est soumise à une force de fermeture tendant à appliquer la soupape sur son siège.

3. Amortisseur selon la revendication 2 **caractérisé par le fait que** la force de fermeture est générée par un ressort.

4. Amortisseur selon la revendication 2 **caractérisé par le fait que** la force de fermeture est générée au moyen d'une différence de pression hydraulique créée par une restriction (44) montée en amont ou en aval de la valve de commande (10).

5. Amortisseur selon l'une quelconque des revendications précédentes **caractérisé par le fait que** la soupape mobile (28) de la valve (10) est soumise à une force tendant à l'ouvrir aux fortes vitesses de déplacement de la tige de l'amortisseur, cette force étant générée au moyen d'une différence de pression hydraulique créée par une restriction (50) montée en aval ou en amont de la valve de commande (10).

6. Amortisseur selon l'une quelconque des revendications précédentes **caractérisé par le fait que** la valve (10) comporte une chambre de commande (25) reliée à l'entrée, du côté du siège de la soupape mobile (28), à la première chambre du cylindre, reliée à la sortie à la deuxième chambre du cylindre et recevant en outre la pression de filtrage ; et que la soupape mobile comporte une tête de soupape (29) capable de coopérer avec le siège, une tige de soupape (31) et un piston de soupape (32) solidaire de la tige à l'opposé de la tête de soupape ; un cylindre de régulation (33) étant logé à l'intérieur de la chambre de commande et définissant une première chambre de régulation fermée (33a), à l'intérieur de laquelle coulisse le piston de soupape.

7. Amortisseur selon la revendication 6 **caractérisé par le fait que** le cylindre de régulation définit une deuxième chambre de régulation fermée (33b) contenant la tige de soupape.

8. Amortisseur selon la revendication 7 **caractérisé par le fait que** la tige de soupape présente un passage traversant (35) mettant en communication le siège de la soupape avec l'une des chambres de régulation.

9. Amortisseur selon l'une quelconque des revendications 2 à 8 **caractérisé par le fait que** la restriction de filtrage (21) est montée dans la conduite reliant la partie (17a) de la chambre d'équilibrage (17) reliée à l'entrée de la valve (10) et à la première chambre du cylindre et que la conduite d'équilibrage (24) est reliée à la première chambre de régulation (33a).

10. Amortisseur selon l'une quelconque des revendications 2 à 8 **caractérisé par le fait que** la restriction de filtrage (21) est montée dans la conduite reliant la partie (17b) de la chambre d'équilibrage (17) reliée à la sortie de la valve (10) et à la deuxième chambre du cylindre et que la conduite d'équilibrage (24) est reliée à la deuxième chambre de régulation (33b).

11. Amortisseur selon la revendication 8 **caractérisé par le fait que** le passage traversant (35) met en communication le siège de la soupape avec la première chambre de régulation (33a) et que le cylindre de régulation définit une troisième et une quatrième chambres de régulation (33c, 33d) contenant la tige de soupape, la soupape comportant un piston auxiliaire (43) séparant les dites troisième et quatrième chambres de régulation.

12. Amortisseur selon la revendication 8 **caractérisé par le fait que** le passage traversant (35) met en communication le siège de la soupape avec la première chambre de régulation et que le cylindre de régulation définit une troisième et une quatrième chambres de régulation (33c, 33d) contenant la tige de soupape, un manchon (46) formant piston auxiliaire (47) étant monté coulissant le long de la tige de la soupape, ledit piston auxiliaire séparant les dites troisième et quatrième chambres de régulation, le manchon coulissant s'appuyant sur la tête de la soupape par l'intermédiaire d'une liaison à ressort (49).

13. Amortisseur selon l'une quelconque des revendications 4 et 11 à 12 **caractérisé par le fait que** les dites troisième et quatrième chambres de régulation (33c, 33d) sont soumises respectivement à la pression en aval et en amont de la restriction (44) montée sur la conduite de sortie de la valve.

14. Amortisseur selon l'une des revendications 11 et 12 **caractérisé par le fait que** la tige (31) comprend un épaulement (31a) dans la troisième chambre (33c).

15. Amortisseur selon la revendication 14 **caractérisé par le fait que** les dites troisième et quatrième chambres de régulation (33c, 33d) sont soumises respectivement à la pression en aval de la restriction (21) montée sur la conduite de sortie de la valve vers la deuxième chambre du cylindre et à la pression en aval d'une restriction montée (50) sur la conduite de sortie de la valve vers le réservoir.

**Claims**

1. Damper, in particular for motor vehicles, comprising a cylinder (2) containing a hydraulic fluid, a main piston (1) actuated by a stem (3) defining in the cylinder a first chamber (2a) and a second chamber (2b), said second chamber containing the stem, a hydraulic fluid re servoir (6) and a valve (10) placed in the hydraulic fluid flow between the first chamber and the second chamber, said valve comprising a movable valve element (28) cooperating with a seat (30) and means designed to press the valve element onto its seat, as well as a balancing chamber (17) divided into two parts by a movable piston (18) which is subject to the action of a balancing spring means (19); and a filtering restriction (21) mounted between one of the parts of the balancing chamber and the valve to generate a filtering control pressure acting on the'valve element of the valve, the control pressure depending on the pressure differential at the inlet and at the outlet of the valve, **characterized in that** the filtering control pressure prevailing in one part of the balancing chamber is brought to the movable valve element of the valve by a balancing pipe (24).

2. Damper according to the preceding claim, **characterized in that** the movable valve element (28) of the valve (10) is subject to a closing force designed to press the valve element on its seat.

3. Damper according to Claim 2, **characterized in that** the closing force is generated by a spring.

4. Damper according to Claim 2, **characterized in that** the closing force is generated by means of a hydraulic pressure differential created by a restriction (44) mounted upstream or downstream of the control valve (10).

5. Damper according to any one of the preceding claims, **characterized in that** the movable valve element (28) of the valve (10) is subject to a force designed to open it at the high displacement speeds of the damper stem, this force being generated by a hydraulic pressure differential created by a restriction (50) mounted downstream or upstream of the control valve (10).

6. Damper according to any one of the preceding claims, **characterized in that** the valve (10) comprises a control chamber (25) linked at the inlet, adjacent the seat of the movable valve element (28), to the first chamber of the cylinder, linked at the outlet to the second chamber of the cylinder and also receiving the filtering pressure; and that the movable valve element comprises a valve element head (29) capable of cooperating with the seat, a valve element stem (31) and a valve element piston (32) integral with the stem at the opposite end from the valve element head; a regulation cylinder (33) being housed inside the control chamber and defining a first closed regulation chamber (33a), inside which the valve element piston slides.

7. Damper according to Claim 6, **characterized in that** the regulation cylinder defines a second closed regulation chamber (33b) containing the valve element stem.

8. Damper according to Claim 7, **characterized in that** the valve element stem has a through passage (35) connecting the seat of the valve element with one of the regulation chambers.

9. Damper according to any one of Claims 2 to 8, **characterized in that** the filtering restriction (21) is mounted in the pipe linking that part (17a) of the balancing chamber (17) linked to the inlet of the valve (10) and to the first chamber of the cylinder and that the balancing pipe (24) is linked to the first regulation chamber (33a).

10. Damper according to any one of Claims 2 to 8, **characterized in that** the filtering restriction (21) is mounted in the pipe linking that part (17b) of the balancing chamber (17) linked to the outlet of the valve (10) and to the second chamber of the cylinder and that the balancing pipe (24) is linked to the second regulation chamber (33b).

11. Damper according to Claim 8, **characterized in that** the through passage (35) connects the seat of the valve element with the first regulation chamber (33a) and that the regulation cylinder defines a third and a fourth regulation chamber (33c, 33d) containing the valve element stem, the valve element comprising an auxiliary piston (43) separating said third and fourth regulation chambers.

12. Damper according to Claim 8, **characterized in that** the through passage (35) connects the seat of the valve element with the first regulation chamber and that the regulation cylinder defines a third and a fourth regulation chamber (33c, 33d) containing the valve element stem, a sleeve (46) forming an auxiliary piston (47) being mounted so as to slide along the stem of the valve element, said auxiliary piston separating said third and fourth regulation chambers, the sliding sleeve pressing on the valve element head through the intermediary of a spring link (49).

13. Damper according to any one of Claims 4 and 11 to 12, **characterized in that** said third and fourth regulation chambers (33c, 33d) are subject respectively to the pressure downstream and upstream of the restriction (44) mounted on the outlet pipe of the valve.

14. Damper according to either of Claims 11 and 12, **characterized in that** the stem (31) comprises a shoulder (31a) in the third chamber (33c).

15. Damper according to Claim 14, **characterized in that** said third and fourth regulation chambers (33c, 33d) are respectively subject to the pressure downstream of the restriction (21) mounted on the outlet pipe of the valve toward the second chamber of the cylinder and to the pressure downstream of a restriction mounted (50) on the outlet pipe of the valve toward the reservoir.

**Patentansprüche**

1. Stoßdämpfer, insbesondere für Kraftfahrzeuge, umfassend: einen Zylinder (2), der ein Hydraulikfluid enthält, einen durch eine Kolbenstange (3) bewegter Hauptkolben (1), der in dem Zylinder eine erste Zylinderkammer (2a) und eine zweite Zylinderkammer (2b) definiert, wobei die zweite Zylinderkammer die Kolbenstange enthält, einen Hydraulikfluidvorratsbehälter (6) und ein in dem Strömungspfad des Hydraulikfluids zwischen der ersten Zylinderkammer und der zweite Zylinderkammer angeordnetes Ventil (10), wobei zu dem Ventil ein bewegliches Ventilverschlussglied (28), das mit einem Sitz (30) und Mitteln zusammenwirkt, die bestrebt sind, das Ventilverschlussglied gegen seinen Sitz zu drücken, sowie eine Ausgleichskammer (17) gehören, die durch einen unter der Wirkung einer Ausgleichsfedereinrichtung (19) stehenden verschiebbaren Kolben (18) in zwei Abschnitte unterteilt ist; und eine Kontrolldrossel (21), die zwischen dem einen der Abschnitte der Ausgleichskammer und dem Ventil vorgesehen ist, um einen Kontrollsteuerdruck zu erzeugen, der auf das Ventilverschlussglied des Ventils wirkt, wobei der Steuerdruck von der Änderung der Druckdifferenz an dem Einlass und an dem Auslass des Ventils abhängt, **dadurch gekennzeichnet, dass** der Kontrollsteuerdruck, der in einem Abschnitt der Ausgleichskammer herrscht, durch eine Ausgleichsleitung (24) auf das bewegliche Ventilverschlussglied des Ventils übertragen wird.

2. Stoßdämpfer nach dem vorhergehenden Anspruch, **dadurch gekennzeichnet, dass** auf das bewegliche Ventilverschlussglied (28) des Ventils (10) eine Schließkraft ausgeübt wird, die bestrebt ist, das Ventilverschlussglied gegen seinen Sitz zu drücken.

3. Stoßdämpfer nach Anspruch 2, **dadurch gekennzeichnet, dass** die Schließkraft durch eine Feder erzeugt wird.

4. Stoßdämpfer nach Anspruch 2, **dadurch gekennzeichnet, dass** die Schließkraft mittels einer hydraulischen Druckdifferenz erzeugt wird, die durch eine Drossel (44) hervorgerufen wird, die stromaufwärts oder stromabwärts des Steuerventils (10) angebracht ist.

5. Stoßdämpfer nach einem der vorhergehenden Ansprüche, **dadurch gekennzeichnet, dass** auf das bewegliche Ventilverschlussglied (28) des Ventils (10) eine Kraft ausgeübt wird, die bestrebt ist, dieses als Folge großer Bewegungsgeschwindigkeiten der Kolbenstange des Stoßdämpfers zu öffnen, wobei diese Kraft mittels einer hydraulischen Druckdifferenz erzeugt wird, die durch eine stromabwärts oder stromaufwärts des Steuerventils (10) angebrachte Drossel (50) hervorgerufen wird.

6. Stoßdämpfer nach einem der vorhergehenden Ansprüche, **dadurch gekennzeichnet, dass** das Ventil (10) eine Steuerkammer (25) aufweist, die mit ihrem Einlass auf der Seite des Sitz des beweglichen Ventils (28) mit der ersten Zylinderkammer und mit ihrem Auslass mit der zweiten Zylinderkammer verbunden ist sowie außerdem den Kontrolldruck aufnimmt; und dass zu dem beweglichen Ventil gehören: ein Ventilteller (29), der in der Lage ist mit dem Sitz zusammenzuwirken, ein Ventilschaft (31) und ein auf der von dem Ventilteller abliegenden Seite starr mit dem Schaft verbundenen Ventilkolben (32); ein Kontrollzylinder (33), der im Inneren der S,teuerkammer angeordnet ist und eine erste geschlossene Kontrollkammer (33a) definiert, in deren Inneren der Ventilkolben gleitet.

**7.** Stoßdämpfer nach Anspruch 6, **dadurch gekennzeichnet, dass** der Kontrollzylinder eine zweite geschlossene Kontrollkammer (33b) definiert, die den Ventilschaft enthält.

**8.** Stoßdämpfer nach Anspruch 7, **dadurch gekennzeichnet, dass** der Ventilschaft eine Durchgangsöffnung (35) aufweist, die den Ventilsitz mit einer der Kontrollkammern in strömungsmäßig verbindet.

**9.** Stoßdämpfer nach einem der Ansprüche 2 bis 8, **dadurch gekennzeichnet, dass** die Kontrolldrossel (21) in der Leitung angebracht ist, über die der Abschnitt (17a) der Ausgleichskammer (17) mit dem Eingang des Ventils (10) und mit der ersten Kammer des Zylinders verbunden ist, und dass die Ausgleichsleitung (24) mit der ersten Kontrollkammer (33a) verbunden ist.

**10.** Stoßdämpfer nach einem der Ansprüche 2 bis 8, **dadurch gekennzeichnet, dass** die Kontrolldrossel (21) in der Leitung angebracht ist, über die der Abschnitt (17b) der Ausgleichskammer (17) mit dem Auslass des Ventils (10) und mit der zweiten Kammer des Zylinders verbundenen ist, und dass die Ausgleichsleitung (24) mit der zweiten Kontrollkammer (33b) verbunden ist.

**11.** Stoßdämpfer nach Anspruch 8, **dadurch gekennzeichnet, dass** die Durchgangsöffnung (35) den Ventilsitz strömungsmäßig mit der ersten Kontrollkammer (33a) verbindet, und dass der Kontrollzylinder eine dritte und eine vierte Kontrolkammer (33c, 33d) definiert, die den Ventilschaft enthält, wobei das Ventilveschlussglied einen Hilfskolben (43) aufweist, der die erwähnte dritte und vierte Kontrollkammer voneinander trennt.

**12.** Stoßdämpfer nach Anspruch 8, **dadurch gekennzeichnet, dass** die Durchgangsöffnung (35) den Ventilsitz mit der ersten Kontrollkammer strömungsmäßig verbindet, und dass der Kontrollzylinder eine dritte und eine vierte Kontrollkammer (33c, 33d) definiert, die den Ventilschaft enthäit, eine Hülse/Manschette (46), die einen Hilfskolben (47) bildet, der entlang dem Ventilschaft verschiebbar angebracht ist, wobei der Hilfskolben die erwähnte dritte und vierte Kontrollkammer voneinander trennt, wobei sich die gleitende Hülse/Manschette mittels einer Verbindung zu der Feder (49) an dem Ventilkopf abstützt.

**13.** Stoßdämpfer nach einem der Ansprüche 4 und 11 bis 12, **dadurch gekennzeichnet, dass** die erwähnte dritte und die erwähnte vierte Kontrollkammer (33c, 33d) jeweils dem Druck ausgesetzt sind, der stromabwärts und stromaufwärts der Drossel (44) herrscht, die in der Ventilauslassleitung angebracht ist.

**14.** Stoßdämpfer gemäß einem der Ansprüche 11 und 12, **dadurch gekennzeichnet, dass** die Kolbenstange (31) in der dritten Kammer (33c) eine Schulter (31a) aufweist.

**15.** Stoßdämpfer nach Anspruch 14, **dadurch gekennzeichnet, dass** die erwähnte dritte und die erwähnte vierte Kontrollkammer (33c, 33d) dem Druck, der stromabwärts der in der Ventilauslassleitung in Richtung der zweiten Kammer des Zylinders angebrachten Drossel (21) bzw. dem Druck ausgesetzt sind, der stromabwärts einer in der Ventilauslassleitung in Richtung des Vorratsbehälters angebrachten Drossel (50) herrscht.

## FIG.1

EP 1 492 965 B1

FIG.2

EP 1 492 965 B1

FIG.3

EP 1 492 965 B1

FIG.4

EP 1 492 965 B1

# FIG.5

21

FIG.6

## FIG.7

EP 1 492 965 B1

# FIG.8

EP 1 492 965 B1

FIG.9

# FIG.10

EP 1 492 965 B1

# FIG.11

# FIG.12

# FIG.13

## FIG.14

## FIG.15